# EUROPÄISCHE PATENTSCHRIFT

(11) **EP 3 014 372 B1**
(45) Veröffentlichungstag und Bekanntmachung des Hinweises auf die Patenterteilung: **01.09.2021**
(21) Anmeldenummer: 14727190.2
(22) Anmeldetag: 27.05.2014
(51) Int. Cl.: G05B 23/02, G07C 5/00, G07C 5/08

(54) **WERKSTATT-DIAGNOSESYSTEM**
WORKSHOP DIAGNOSTIC SYSTEM
SYSTÈME DIAGNOSTIQUE D'UN ATELIER

(30) Priorität: 27.06.2013 DE 102013212505
(43) Veröffentlichungstag der Anmeldung: 04.05.2016
(73) Patentinhaber: Robert Bosch GmbH, 70442 Stuttgart (DE)
(72) Erfinder: WAGNER, Mirko, 73033 Goeppingen (DE); SCHNEIDER, Klaus, 71640 Ludwigsburg (DE)
(86) Internationale Anmeldenummer: PCT/EP2014/060905
(87) Internationale Veröffentlichungsnummer: WO 2014/206674

(56) Entgegenhaltungen:
- DE-A1-102011 076 378
- DE-A1-102011 086 352
- US-A1- 2002 007 237
- US-A1- 2013 110 344
- None

## Beschreibung

Die Erfindung betrifft ein Werkstatt-Diagnosesystem, insbesondere ein Werkstatt-Diagnosesystem für eine Kfz-Werkstatt, das in der Lage ist, fahrzeugspezifische Reparatur- und/oder Diagnosevorschläge zur Verfügung zu stellen.

### Stand der Technik

Die Fehlersuche in Kraftfahrzeugen ist eine Aufgabe von Kfz-Werkstätten. Hierzu setzten die Werkstätten als technisches Hilfsmittel häufig sogenannte Diagnosetester ein. Eine Aufgabe eines Diagnosetesters ist es, mit im Kraftfahrzeug verbauten Steuergeräten zu kommunizieren und deren Fehlerspeicher auszulesen, eine weitere, die Fehlersuche zu unterstützen. Wünschenswert ist ein Diagnosetester, der den Mechaniker bei der Fehlersuche unterstützt, indem der Diagnosetester auf der Grundlage von Symptomen, Fehlerspeichereinträgen und den bereits am Kraftfahrzeug durchgeführten Prüfungen mögliche defekte Komponenten benennt und/oder Vorschläge für weitere Prüfschritte erzeugt. Die Grundlage für eine solche Funktionalität des Diagnosetesters ist das Wissen über Ursache-Wirkungs-Beziehungen zwischen einer defekten Komponente im Kraftfahrzeug und den Auswirkungen des Defekts auf Symptome, Fehlerspeichereinträge und Messergebnissen von Prüfabläufen.

Ein Beispiel für ein derartiges Diagnosesystem, das eine geführte Fehlersuche ermöglicht, wird in DE 10 2011 086 352 A1 beschrieben. Das im Diagnosetester hinterlegte Wissen über die genannten Ursache-Wirkungs-Beziehungen zwischen einer defekten Komponente im Kraftfahrzeug und den Auswirkungen des Defekts auf Symptome, Fehlerspeichereinträge und Messergebnisse von Prüfabläufen müssen Werkstatt-Experten ("Autoren") auf der Basis ihres Erfahrungsschatzes pflegen. Die Vielzahl an Marken und Varianten von Kraftfahrzeugen hat einen hohen Aufwand zur Folge, der notwendig ist, um die notwendige Wissensbasis manuell durch Autoren zu erstellen.

Markengebundene Werkstätten müssen die Diagnosesysteme des jeweiligen KFZ-Herstellers einsetzen. Die geführte Fehlersuche baut zum einen auf das Wissen von Diagnoseautoren, zum anderen auf empirisches Wissen, indem die Hersteller Falldatenbanken, z.B. in Form von Technical Service Bulletins, auf¬bauen und den Werkstätten zur Verfügung stellen. Die beiden Ansätze zur Unterstützung des Mechanikers sind jedoch unabhängig voneinander.

Im herstellerunabhängigen "Independent Aftermarket (IAM)" etablieren sich zunehmend fallbasierte Datenbanken. Hierbei sammeln die Anbieter eine Viel¬zahl von Reparaturfällen und bieten Werkstätten, gegen Bezahlung, Zugang zu ihren Datenbanken, um ähnliche Fälle recherchieren zu können.

Die Qualität eines Diagnosesystems für den IAM, welches allein auf Falldaten-banken beruht, ist stark von den tatsächlichen Fallzahlen pro Kraftfahrzeug und dem Symptombild abhängig. Fallbasierte Systeme erlauben es, bei entsprechenden Fallzahlen typische Probleme an Kraftfahrzeugen zuverlässig zu er¬ken¬nen. Aufgrund der Vielfalt an Marken und Modellvarianten sind die tatsächlichen Fallzahlen, außer bei Massenfahrzeugen, oft klein, so dass die Varianz der vorgeschlagenen Ursachen und defekten Komponenten hoch ist und die gewünschte Zuverlässigkeit der Vorschläge daher nicht immer realisierbar ist.

Diagnosesysteme für den IAM mit Hilfe von Autorenwissen aufzubauen, ist zum einen aufgrund der Vielfalt an Marken und Varianten aufwändig und kostspielig, und darüber hinaus vom Erfahrungsschatz der beteiligten Autoren abhängig. Typische Probleme eines Kraftfahrzeugs können aufgrund fehlender Erfahrung der beteiligten Autoren übersehen werden, jedoch ist die Zuverlässigkeit und Varianz der Reparaturvorschläge hoch.

Aus der US 2002/0007237 A1 sind ein Verfahren und eine Vorrichtung bekannt, die Fahrzeugprofile identifizieren und diagnostische Symptome sowie eine Reparaturlösung ermitteln. Dabei sammelt das System Diagnoseinformationen von Fahrzeugmodulen, analysiert die Daten, priorisiert optimale Lösungen und empfiehlt die wahrscheinlich beste Lösung. Dabei wird Data Mining Technologie verwendet, um Symptome und Fahrzeuginformationen mit Lösungen zu korrelieren.

### Offenbarung der Erfindung

Es ist eine Aufgabe der Erfindung, ein verbessertes Diagnosesystem zur Verfügung zu stellen, das die Nachteile der zuvor beschriebenen Ansätze vermeidet.

Ein erfindungsgemäßes Werkstatt-Diagnosesystem zur Unterstützung der Fehlersuche an einem technischen Objekt, insbesondere an einem Kraftfahrzeug, umfasst wenigstens einen Diagnosetester und wenigstens einen Diagnoseserver, wobei der Diagnosetester wenigstens eine Objekt-Kommunikationsvorrichtung und wenigstens eine Übertragungseinheit aufweist.

Die Objekt-Kommunikationsvorrichtung ist ausgebildet ist, erste Diagnosedaten von wenigstens einem Objekt-Steuergerät des technischen Objekts zu empfangen, und die Übertragungseinheit ist ausgebildet, die ersten Diagnosedaten an den Diagnoseserver zu übertragen, aufweist. Nicht unbedingt alle der von dem Diagnosetester erfassten Daten werden zur Durchführung einer Diagnose benötigt. Insbesondere sind Diagnosen möglich, für die ein Teil der von dem Diagnosetester erfassten Daten nicht relevant ist. Der Diagnosetester und/oder der Diagnoseserver sind daher dazu ausgebildet, aus den ersten Diagnosedaten wenigsten einen Satz von ersten Diagnosedaten zu bilden, der einen Teil oder alle der ersten Diagnosedaten umfasst, und dem auf diese Weise gebildeten Satz von ersten Diagnosedaten wenigstens ein erstes Diagnoseergebnis zuzuordnen.

Das Werkstatt-Diagnosesystem weist auch eine erste, eine zweite und eine dritte Datenbank auf. Die erste Datenbank ist zur Speicherung von im Zuge aufeinanderfolgender Diagnosen erstellten ersten Diagnosedatensätzen vorgesehen, wobei jeder der ersten Diagnosedatensätze einen jeweiligen Satz von ersten Diagnosedaten und das wenigstens eine dem Satz von ersten Diagnosedaten zugeordnete erste Diagnoseergebnis umfasst. Die zweite Datenbank ist zur Speicherung von vorgegebenen zweiten Diagnosedatensätzen ausgebildet, wobei jeder der zweiten Diagnosedatensätze einen jeweiligen Satz von zweiten Diagnosedaten und ein dem Satz von zweiten Diagnosedaten zugeordnetes zweites Diagnoseergebnis umfasst.

Das Werkstatt-Diagnosesystem hat auch ein Auswertungssystem, mit einer Zuordnungseinheit, die dazu ausgebildet ist, die Diagnosedaten und/oder das Diagnoseergebnis eines der ersten Diagnosedatensätze mit den Diagnosedaten und/oder dem Diagnoseergebnis der vorgegebenen zweiten Diagnosedatensätze zu vergleichen und dem jeweiligen ersten Diagnosedatensatz einen der vorgegebenen zweiten Diagnosedatensätze zuzuordnen, der nach Maßgabe des Vergleichs die größte Ähnlichkeit mit dem jeweiligen ersten Diagnosedatensatz aufweist. Das Werkstatt-Diagnosesystem umfasst auch eine Speichereinheit, die ausgebildet ist, die von der Zuordnungseinheit vorgenommene Zuordnung zu speichern, und einer Datensatz-Erzeugungseinheit, die ausgebildet ist, den jeweils zugeordneten zweiten Diagnosedatensatz anhand der Gesamtheit aller ersten Diagnosedatensätze, die diesem zweiten Diagnosedatensatz zugeordnet sind, zu modifizieren, um wenigstens einen dritten Diagnosedatensatz zu erzeugen und den dritten Diagnosedatensatz in der dritten Datenbank zu speichern. Dabei umfasst der dritte Diagnosedatensatz einen jeweiligen Satz von dritten Diagnosedaten und wenigstens ein dem Satz von dritten Diagnosedaten zugeordnetes drittes Diagnoseergebnis. Das Werkstatt-Diagnosesystem ist derart ausgebildet, dass es den wenigstens einen dritten Diagnosedatensatz einer Unterstützung der Fehlersuche an dem technischen Objekt zugrunde legt.

Die Erfindung betrifft auch Verfahren zur Unterstützung der Fehlersuche an einem technischen Objekt, insbesondere an einem Kraftfahrzeug, wobei das Verfahren die folgenden Schritte umfasst: erste Diagnosedaten von wenigstens einem Objekt-Steuergerät zu empfangen und an einen Diagnoseserver zu übertragen; aus jeweils übertragenen ersten Diagnosedaten wenigsten einen Satz von ersten Diagnosedaten zu bilden, der wenigstens einen Teil der ersten Diagnosedaten umfasst, und dem Satz von ersten Diagnosedaten wenigstens ein erstes Diagnoseergebnis zuzuordnen, die im Zuge aufeinanderfolgender Diagnosen erstellten ersten Diagnosedatensätzen in einer ersten Datenbank zu speichern, wobei jeder der ersten Diagnosedatensätze einen jeweiligen Satz von ersten Diagnosedaten und das wenigstens eine dem Satz von ersten Diagnosedaten zugeordnete erste Diagnoseergebnis umfasst; die Diagnosedaten und/oder das Diagnoseergebnis eines jeweiligen der ersten Diagnosedatensätze mit den Diagnosedaten und/oder dem Diagnoseergebnis vorgegebener zweiter Diagnosedatensätze, die in einer zweiten Datenbank gespeichert sind und jeweils einen Satz von zweiten Diagnosedaten und ein dem Satz von zweiten Diagnosedaten zugeordnetes zweites Diagnoseergebnis enthalten, zu vergleichen und dem jeweiligen ersten Diagnosedatensatz einen der vorgegebenen zweiten Diagnosedatensätze zuzuordnen, der nach Maßgabe des Vergleichs die größte Ähnlichkeit mit dem jeweiligen ersten Diagnosedatensatz aufweist; die von der Zuordnungseinheit vorgenommene Zuordnung zu speichern; den jeweils zugeordneten zweiten Diagnosedatensatz anhand der Gesamtheit aller ersten Diagnosedatensätze, die diesem zweiten Diagnosedatensatz zugeordnet sind, zu modifizieren, um wenigstens einen dritten Diagnosedatensatz zu erzeugen, wobei der dritte Diagnosedatensatz einen jeweiligen Satz von dritten Diagnosedaten und wenigstens ein dem Satz von dritten Diagnosedaten zugeordnetes drittes Diagnoseergebnis enthält; und den dritten Diagnosedatensatz in einer dritten Datenbank zu speichern. Das Verfahren umfasst schließlich auch, der Unterstützung der Fehlersuche an dem technischen Objekt wenigstens einen dritten Diagnosedatensatz zugrunde zu legen.

Eine Grundidee der Erfindung ist somit die Kombination von Feedbackdaten aus der ersten Datenbank ("Falldatenbank"), die im Zuge der Durchführung von Fahrzeugdiagnosen angesammelt werden, mit Daten aus der zweiten Datenbank ("Autorendatenbank"), die von menschlichen Autoren erstellt worden sind. Diese Kombination von Daten unterschiedlichen Ursprungs vermeidet im Vergleich zu rein fallbasierten Diagnosesystemen eine hohe Varianz der vorgeschlagenen Diagnosen und weiteren Prüfschritte, wie sie sonst insbesondere bei kleinen Fallzahlen auftreten würde; ermöglicht aber durch das Auswerten der fallbasierten Daten in der ersten Datenbank auch das Entdecken Fehlern in Fahrzeugen, die sich aufgrund hoher Fallzahl als "typisch" für den jeweiligen Fahrzeugtyp erweisen, von den menschlichen Autoren aber nicht vorhergesehen worden sind.

Darüber hinaus ist die vorgeschlagene Methode zur Auswahl eines Modells für die Ursache-Wirkungsbeziehungen von Vorteil, weil nicht versucht wird, aus den Falldaten ein rein empirisches Modell zu entwickeln, was aufgrund kleiner Fallzahlen in das statistische Problem des "Fluchs der Dimensionalität" führt und damit fälschlicherweise evtl. nicht vorhandene Ursache-Wirkungs-Beziehungen schätzt. Vielmehr werden ausgehend von dem gesicherten Autorenwissen in der zweiten Datenbank kleine Änderungen getestet und anhand der in der ersten Datenbank gespeicherten Fälle statistisch überprüft.

In einer Ausführungsform umfassen die ersten, zweiten und dritten Diagnosedaten jeweils wenigstens eine Diagnosevariable und wenigstens einen der Diagnosevariablen zugeordneten Wert. Auf diese Weise können die Diagnosedaten verschiedene Arten von Messwerten (Temperatur, Druck, usw.) umfassen, denen jeweils wenigstens ein konkreter Messwert oder ein Bereich von Messwerten zugeordnet ist.

Die Zuordnungseinheit und/oder die Datensatz-Erzeugungseinheit sind so ausgebildet, dass numerische Differenzen zwischen Werten korrespondierender Diagnosedaten der jeweils zu bearbeitenden Datensätze berechnet werden und die Zuordnung eines ersten Diagnosedatensatzes zu einem zweiten Diagnosedatensatz und/oder die Modifikation eines zweiten Diagnosedatensatzes anhand der so berechneten numerischen Differenzen erfolgt, wobei korrespondierende Diagnosedaten Diagnosedaten sind, welche die gleiche Diagnosevariable enthalten.

Dabei sind die Zuordnungseinheit und/oder die Datensatz-Erzeugungseinheit insbesondere ausgebildet, eine numerische Differenz zwischen den Diagnoseergebnissen der beiden Datensätze anhand einer vorgegebenen Metrik, die einen numerischen Abstand zwischen jeweils zwei Diagnoseergebnissen definiert, zu berechnen.

Auf diese Weise kann ein numerischer Abstand zwischen zwei Diagnoseergebnissen definiert werden, wobei die verschiedenen Variablen innerhalb der Diagnosedaten unterschiedlich gewichtet werden können. Insbesondere ermöglicht es eine geeignet, beispielsweise in Form einer Tabelle, definierte Metrik, einen numerischen Abstand zwischen nicht numerischen Diagnosedaten und insbesondere Diagnoseergebnissen zu definieren.

Die Zuordnungseinheit und/oder die Datensatz-Erzeugungseinheit können ausgebildet sein, jeweils einen Mittelwert der numerischen Differenzen als Vergleichswert zu berechnen, um auf diese Weise einen numerischen Abstand, der durch eine einzige Zahl ausgedrückt wird, zwischen zwei Datensätzen zu berechnen. Der Mittelwert kann insbesondere ein gewichteter Mittelwert sein, der es ermöglicht, die einzelnen Diagnosedaten ihrer Relevanz entsprechend unterschiedlich zu gewichten.

In einer Ausführungsform ist die Datensatz-Erzeugungseinheit ausgebildet, den dritten Diagnosedatensatz ausgehend von dem zugeordneten zweiten Diagnosedatensatz zu erzeugen und dabei in Abhängigkeit von einem Modifikationsdatensatz, der aus der Gesamtheit aller dem zweiten Diagnosedatensatz zugeordneten ersten Datensätze ermittelt worden ist, wenigstens einen Wert wenigstens einer Diagnosevariablen in dem zweiten Diagnosedatensatz zu verändern; wenigstens eine Diagnosevariable aus dem zweiten Diagnosedatensatz zu entfernen; und/oder wenigstens eine Diagnosevariable zu dem zweiten Diagnosedatensatz hinzuzufügen.

Dabei kann die Datensatz-Erzeugungseinheit insbesondere ausgebildet sein, den zweiten Diagnosedatensatz nur zu modifizieren, wenn der ermittelte Modifikationsdatensatz statistisch signifikant ist, d.h., wenn die Wahrscheinlichkeit, dass die Unterschiede zwischen dem ermittelten Modifikationsdatensatz und dem zweiten Datensatz, dem die ersten Datensätze, aus denen der Modifikationsdatensatz erzeugt worden ist, zugeordnet sind, zufällig zustande gekommen sind, nicht über einer vorgegebenen Schwelle, die als "Signifikanzniveau" bezeichnet wird, von beispielsweise 0,05 liegt.

Dabei berücksichtigt die statistische Signifikanz die Anzahl der ersten Diagnosedatensätze, aus denen der Modifikationsdatensatz ermittelt worden ist, und die Konsistenz der Diagnosedaten und Diagnoseergebnissen in diesen ersten Diagnosedatensätzen.

In einer Ausführungsform ist die Datensatz-Erzeugungseinheit ausgebildet, den dritten Diagnosedatensatz anhand der Gesamtheit der ersten Datensätze, die dem zweiten Diagnosedatensatz zugeordnet sind, zu erzeugen und dabei
a) anhand der Gesamtheit der ersten Datensätze, die dem zweiten Diagnosedatensatz zugeordnet sind, Werte für die einzelnen Diagnosevariablen des zweiten Diagnosedatensatzes zu ermitteln, um einen ersten Test-Datensatz zu erzeugen;
b) durch Hinzufügen oder Entfernen von Diagnosevariablen aus dem zweiten Diagnosedatensatz einen oder mehrere weitere Test-Datensätze zu erzeugen und den Diagnosevariablen der weiteren Test-Datensätze anhand der Gesamtheit der ersten Datensätze, die dem zweiten Diagnosedatensatz zugeordnet sind, Werte zuzuordnen; und
c) mit Methoden der statistischen Modellselektion aus den Test-Datensätzen denjenigen Test-Datensatz als neuen dritten Datensatz auszuwählen, der in Bezug auf die Gesamtheit der ersten Datensätze, die dem zweiten Diagnosedatensatz zugeordnet sind, die höchste statistische Signifikanz aufweist.

Die Methoden der statistischen Modellselektion können insbesondere das Kullback-Leibler-Divergence-Verfahren, Verfahren der logistischen Regression und/oder graphische Modelle umfassen.

Das Werkstatt-Diagnosesystem wird so zu einem selbst-lernenden System, das die in der zweiten Datenbank von menschlichen Autoren vorgegebenen Diagnosedatensätze auf Grundlage einer Auswertung der Falldaten der durchgeführten Diagnosen modifiziert, um die Diagnoseergebnisse zu verbessern. Auch können neue Ursache-Wirkung-Beziehungen, die von den menschlichen Autoren übersehen oder unterschätzt worden sind, erkannt und in das System aufgenommen werden. Darüber hinaus, können von den Autoren vorgegebene Ursache-Wirkung-Beziehungen, die sich in der Praxis als nicht relevant erweisen, entfernt werden, um die Gefahr von Fehldiagnosen zu reduzieren.

Ein erstes, zweites oder drittes Diagnoseergebnis kann jeweils wenigstens eine Angabe einer als Defekt erkannten Komponenten und/oder Vorschläge für weitere durchzuführende Prüfschritte umfassen, um dem Anwender konkrete Handlungsanweisungen für die weitere Diagnose und/oder Reparatur zu geben.

In einer Ausführungsform ist die erste Datenbank derart ausgebildet, dass sie erste Diagnosedatensätze von einer Mehrzahl unterschiedlicher Diagnosetestern empfängt. Auf diese Weise können in der ersten Datenbank Diagnosedaten von einer Mehrzahl von Diagnosetestern, die vorzugsweise in einer Vielzahl unterschiedlicher Werkstätten im Einsatz sind, gesammelt und gespeichert werden, um eine breite Grundlage für eine zuverlässige statistische Auswertung der Diagnosedaten zu schaffen.

### Figurenbeschreibung:

Die Erfindung wird im Folgenden anhand der beigefügten Figuren näher erläutert.

Dabei zeigt:
Fig. 1 schematisch den Aufbau eines erfindungsgemäßen Werkstattdiagnosesystems; und
Fig. 2 schematisch den erfindungsgemäßen Ablauf einer Fahrzeugdiagnose unter Verwendung aufbereiteter Ursache-Wirkung-Beziehungen.

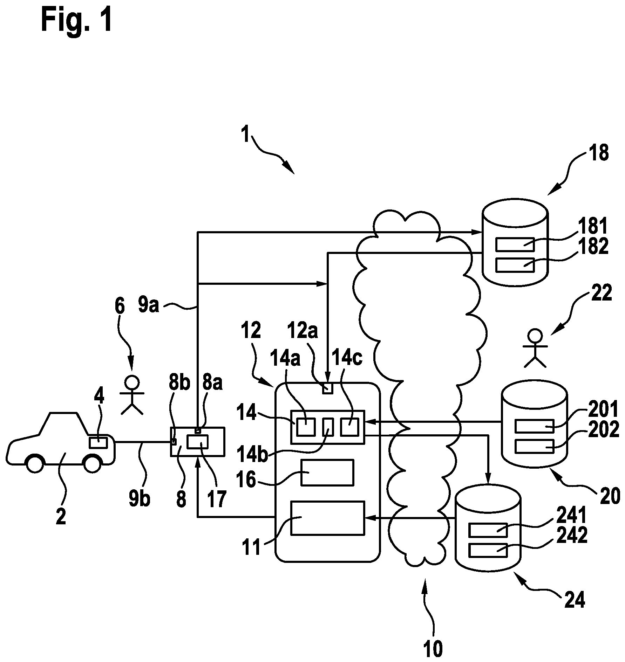

Fig. 1 zeigt schematisch den Aufbau eines erfindungsgemäßen Werkstatt-Diagnosesystems 1.

Ein erfindungsgemäßes Werkstatt-Diagnosesystem 1 umfasst wenigstens einen Diagnosetester 8 mit einer Fahrzeug-Kommunikationsvorrichtung 8b, die von einem Mechaniker 6 in Kommunikationsverbindung 9b mit einer Fahrzeugkommunikationsschnittstelle (VCI) 4 eines Fahrzeugs 2 gebracht werden kann, um eine Fahrzeugdiagnose durchzuführen. Dabei kann die Kommunikationsverbindung 9b insbesondere über eine Kabel- bzw. Steckverbindung oder drahtlos, z. B. über WLAN oder Bluetooth®, hergestellt werden.

Der Diagnosetester 8 weist auch eine Übertragungseinheit 8a auf, die ausgebildet ist, über eine weitere Kommunikationsverbindung 9a, die ebenfalls drahtgebunden oder drahtlos ausgebildet sein und insbesondere auch das Internet 10 einschließen kann, mit einer ersten Datenbank ("Falldatenbank") 18 und/ oder einem Server 12 zu kommunizieren und wenigstens einen Teil der von dem Diagnosetester 8 aus der Fahrzeugkommunikationsschnittstelle 4 ausgelesenen Daten, die für eine Diagnose relevant sein können, zu übertragen.

Der Diagnosetester 8 kann auch ausgebildet sein, zusätzliche Daten, die in ihm gespeichert und/oder von dem Mechaniker 6 manuell in den Diagnosetester 8 eingegeben worden sind, und/oder modifizierte Daten, die auf aus der Fahrzeugkommunikationsschnittstelle 4 ausgelesenen Daten beruhen, aber in dem Diagnosetester 8, z.B. durch eine Benutzereingabe des Mechanikers 6, modifiziert worden sind, an die erste Datenbank 18 zu übertragen.

Die erste Datenbank 18 steht, z.B. über das Internet 10, in Kommunikationsverbindung mit einer Auswerteeinheit 14, die insbesondere in einem Diagnoseserver 12 implementiert sein kann.

Eine Server-Empfangsvorrichtung 12a des Diagnoseservers 12 empfängt erste Diagnosedatensätze 181, 182 aus der ersten Datenbank 18 und zusätzlich zweite Diagnosedatensätze 201, 202 aus einer zweiten Datenbank 20 ("Autorendatenbank"), die von einem oder mehreren menschlichen Autoren 22 mit Daten gefüllt worden ist und ebenfalls, z.B. über das Internet 10, in Kommunikationsverbindung mit dem Diagnoseserver 12 und insbesondere der Auswerteeinheit 14 steht. In einem möglichen Ausführungsbeispiel kann die Server-Empfangsvorrichtung 12a auch direkt von dem Diagnosetester 8 Daten empfangen.

Die Server-Empfangsvorrichtung 12a leitet die empfangenen Daten an die Auswerteeinheit 14 weiter.

Die Auswerteeinheit 14 weist insbesondere eine Zuordnungseinheit 14a, eine Speichereinheit 14b und eine Datensatz-Erzeugungseinheit 14c auf.

Die Zuordnungseinheit 14a ist ausgebildet, die Diagnosedaten und/oder das Diagnoseergebnis eines jeweiligen der ersten Diagnosedatensätze 181, 182 aus der ersten Datenbank 18 mit den Diagnosedaten und/oder dem Diagnoseergebnis der in der zweiten Datenbank 20 vorgegebenen zweiten Diagnosedatensätze 201, 202 zu vergleichen und dem jeweiligen ersten Diagnosedatensatz 181, 182 einen der vorgegebenen zweiten Diagnosedatensätze 201, 202 zuzuordnen, der nach Maßgabe des Vergleichs die größte Ähnlichkeit mit dem jeweiligen ersten Diagnosedatensatz 181, 182 aufweist. Die von der Zuordnungseinheit 14a vorgenommene Zuordnung wird in der Speichereinheit 14b gespeichert.

Die Datensatz-Erzeugungseinheit 14c ist ausgebildet, den jeweils zugeordneten zweiten Diagnosedatensatz 201, 202 anhand der Gesamtheit aller ersten Diagnosedatensätze 181, 182, die diesem zweiten Diagnosedatensatz 201, 202 zugeordnet sind, zu modifizieren, um wenigstens einen dritten Diagnosedatensatz 241, 242 zu erzeugen, wobei jeder dritte Diagnosedatensatz 241, 242 einen jeweiligen Satz von dritten Diagnosedaten und wenigstens ein dem Satz von dritten Diagnosedaten zugeordnetes drittes Diagnoseergebnis umfasst.

Die auf diese Weise erstellten dritte Diagnosedatensätze 241, 242 werden in einer dritten Datenbank 24 ("Diagnosedatenbank"), die ebenfalls, z.B. über das Internet 10, in Kommunikationsverbindung mit dem Diagnoseserver 12 steht, gespeichert.

Das Werkstatt-Diagnosesystem 1 ist auf diese Weise als ein selbst-lernendes System ausgebildet, das die in der zweiten Datenbank 20 von menschlichen Autoren vorgegebenen zweiten Diagnosedatensätze 201, 202 auf der Grundlage einer Auswertung der Falldaten der durchgeführten Diagnosen, die in den ersten Diagnosedatensätzen 181, 182 gespeichert sind, modifiziert, um die Diagnoseergebnisse zu verbessern.

Dadurch können auch neue Ursache-Wirkung-Beziehungen, die von den menschlichen Autoren beim Erstellen der zweiten Diagnosedatensätze 201, 202 in der zweiten Datenbank 20 übersehen oder unterschätzt worden sind, erkannt und in das System aufgenommen werden. Darüber hinaus können von den Autoren 22 vorgegebene Ursache-Wirkung-Beziehungen, die sich in der Praxis als nicht relevant erweisen, entfernt werden, um die Gefahr von Fehldiagnosen zu reduzieren.

Basierend auf den Ursache-Wirkung-Beziehungen, die in den in der dritten Datenbank 24 gespeicherten dritten Diagnosedatensätzen 241, 242 niedergelegt sind, wird von einer Diagnoseeinheit 11, die ausgebildet ist, die in der dritten Datenbank 24 gespeicherten dritten Datensätze 241, 242 auszuwerten, um die Fehlersuche an dem technischen Objekt auf der Basis wenigstens eines der dritten Diagnosedatensätze 241, 242 zu unterstützen und insbesondere Vorschläge für weitere Diagnose- und Reparaturschritte, wie z. B. den Austausch wenigstens einer defekten Komponente, zu erstellen, dem Mechaniker 6 auf einer Anzeigevorrichtung 16 des Diagnoseservers 12 und/oder auf einer Anzeigevorrichtung 17 des Diagnosetesters 8 ein Diagnoseergebnis angezeigt.

Der Mechaniker 6 kann die vorgeschlagenen weiteren Diagnose- und/oder Reparaturschritte und/oder Angaben über wenigstens eine möglicherweise defekte Komponente des Fahrzeugs 2 von wenigstens einer Anzeigevorrichtung 16, 17 ablesen und die vorgeschlagenen Maßnahmen durchführen.

Die erste Datenbank 18, die zweite Datenbank 20 und die dritte Datenbank 24 sind typischerweise nicht nur einem einzigen Diagnoseserver 12, der in einer einzigen Werkstatt installiert ist, zugeordnet. Die erste Datenbank 18, die zweite Datenbank 20 und die dritte Datenbank 24 sind in der Regel vielmehr über geeignete Datenverbindungen, insbesondere das Internet 10, mit einer Vielzahl von (in der Figur 1 nicht gezeigten) ähnlich aufgebauten Diagnoseservern 12, die in einer oder mehreren Werkstätten installiert sind, verbunden, so dass in der ersten Datenbank 18 und der dritten Datenbank 24 Diagnosedaten aus mehreren Werkstätten gesammelt werden und für die Auswertung zur Verfügung stehen.

Auf diese Weise werden in der ersten Datenbank 18 und der dritten Datenbank 24 Daten einer Vielzahl von Reparaturvorgängen aus verschiedenen Werkstätten gesammelt, und es wird ein hinreichend großer Bestand an Diagnosedaten geschaffen, der es ermöglicht, die in der ersten Datenbank 18 gespeicherten ersten Datensätze 181, 182 statistisch auszuwerten und aufgrund der Ergebnisse der statistischen Auswertung der gespeicherten ersten Datensätze 181, 182 eine Fahrzeugdiagnose vornehmen und geeignete weitere Diagnose- und/oder Reparaturschritte vorzuschlagen.

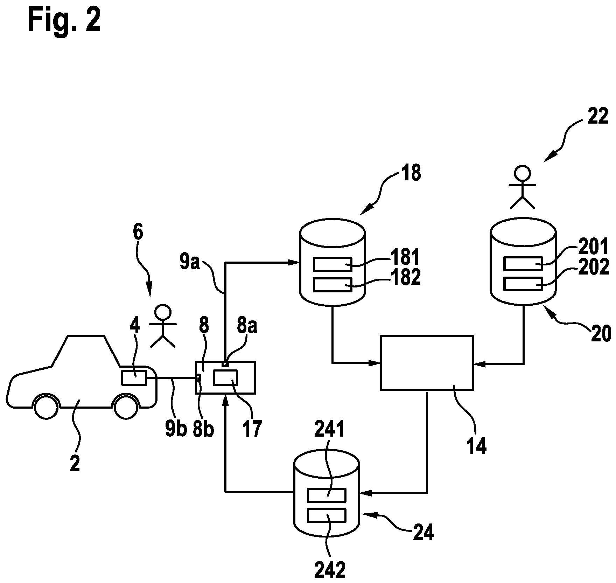

Fig. 2 zeigt schematisch den Ablauf einer Fahrzeugdiagnose bei Verwendung eines erfindungsgemäßen Werkstatt-Diagnosesystems.

Die von dem Diagnosetester 8 über einer Fahrzeug-Kommunikationsvorrichtung 8b aus einer Fahrzeugkommunikationsschnittstelle ("VCI") 4 ausgelesenen Fahrzeug-Diagnosedaten werden von der Übertragungseinheit 8a an die erste Datenbank 18 übertragen, als erste Datensätze 181, 182 in der ersten Datenbank 18 gespeichert, und der Auswerteeinheit 14 zur Verfügung gestellt.

In der zweiten Datenbank 20 wurden zuvor von menschlichen Autoren 22 zweite Datensätze 201, 202 mit Ursache-Wirkungs-Beziehungen zwischen Fahrzeug-Diagnosedaten, wie sie von dem Diagnosetester 8 aus der Fahrzeugkommunikationsschnittstelle 4 zur Verfügung gestellt werden, und möglichen Fehlern einschließlich Vorschlägen für weitere Prüf-, Diagnose- und/oder Reparaturschritte hinterlegt.

Die Auswerteeinheit 14 wertet die aus der ersten Datenbank 18 gewonnenen Daten unter Verwendung der Ursache-Wirkungs-Beziehungen, die der zweiten Datenbank 20 entnommen worden sind, aus, und stellt in der dritten Datenbank 24 dritte Datensätze 241, 242 mit aufbereitete Ursache-Wirkungs-Beziehungen zur Verfügung.

Das Werkstatt-Diagnosesystem 1 umfasst auch eine Diagnoseeinheit 11, die ausgebildet ist, die in der dritten Datenbank 24 gespeicherten dritten Datensätze 241, 242 auszuwerten, um die Fehlersuche an dem technischen Objekt auf der Basis wenigstens eines der dritten Diagnosedatensätze 241, 242 zu unterstützen und insbesondere Vorschläge für weitere Diagnose- und Reparaturschritte, wie z. B. den Austausch wenigstens einer defekten Komponente, zu erstellen und dem Mechaniker 6 über wenigstens eine der Anzeigevorrichtungen 16, 17 zur Verfügung z stellen.

Fakultativ kann der Diagnosetester 8 auch so ausgebildet sein, dass er von dem Diagnosesystem 1 ansteuerbar ist und, ggf. nach Zustimmung des die Diagnose durchführenden Mechanikers 6, in Verbindung mit der Fahrzeugkommunikationsschnittstelle 4 tritt, um selbständig weitere Diagnoseschritte am Fahrzeug 2 vorzunehmen.

## Patentansprüche

1. Werkstatt-Diagnosesystem (1) zur Unterstützung der Fehlersuche an einem technischen Objekt, insbesondere an einem Kraftfahrzeug, umfassend:
wenigstens einen Diagnosetester (8) und wenigstens einen Diagnoseserver (12),
wobei der Diagnosetester (8) wenigstens eine Objekt-Kommunikationsvorrichtung (8b), die ausgebildet ist, erste Diagnosedaten von wenigstens einem Objekt-Steuergerät (4) des technischen Objekts zu empfangen, und wenigstens eine Übertragungseinheit (8a), die ausgebildet ist, die ersten Diagnosedaten an den Diagnoseserver (12) zu übertragen, aufweist;
wobei der Diagnosetester (8) und/oder der Diagnoseserver (12) dazu ausgebildet sind, aus den ersten Diagnosedaten wenigsten einen Satz von ersten Diagnosedaten zu bilden, der wenigstens einen Teil der ersten Diagnosedaten umfasst, und dem Satz von ersten Diagnosedaten wenigstens ein erstes Diagnoseergebnis zuzuordnen,
eine erste Datenbank (18), die zur Speicherung von im Zuge aufeinanderfolgender Diagnosen erstellten ersten Diagnosedatensätzen (181, 182) ausgebildet ist, wobei jeder der ersten Diagnosedatensätze (181, 182) einen jeweiligen Satz von ersten Diagnosedaten und das wenigstens eine dem Satz von ersten Diagnosedaten zugeordnete erste Diagnoseergebnis umfasst,
eine zweite Datenbank (20), die zur Speicherung von vorgegebenen zweiten Diagnosedatensätzen (201, 202) ausgebildet ist, wobei jeder der zweiten Diagnosedatensätze (201, 202) einen jeweiligen Satz von zweiten Diagnosedaten und ein dem Satz von zweiten Diagnosedaten zugeordnetes zweites Diagnoseergebnis umfasst,
**dadurch gekennzeichnet, dass** das Werkstatt-Diagnosesystem weiter umfasst ein Auswertungssystem (14), mit
einer Zuordnungseinheit (14a), die dazu ausgebildet ist, die Diagnosedaten und/oder das Diagnoseergebnis eines jeweiligen der ersten Diagnosedatensätze (181, 182) mit den Diagnosedaten und/oder dem Diagnoseergebnis der vorgegebenen zweiten Diagnosedatensätze (201, 202) zu vergleichen und dem jeweiligen ersten Diagnosedatensatz (181, 182) einen der vorgegebenen zweiten Diagnosedatensätze (201, 202) zuzuordnen, der nach Maßgabe des Vergleichs die größte Ähnlichkeit mit dem jeweiligen ersten Diagnosedatensatz (181, 182) aufweist;
einer Speichereinheit (14b), die ausgebildet ist, die von der Zuordnungseinheit (14a) vorgenommene Zuordnung zu speichern; und
einer Datensatz-Erzeugungseinheit (14c), die ausgebildet ist, den jeweils zugeordneten zweiten Diagnosedatensatz (201, 202) anhand der Gesamtheit aller ersten Diagnosedatensätze (181, 182) , die diesem zweiten Diagnosedatensatz (201, 202) zugeordnet sind, zu modifizieren, um wenigstens einen dritten Diagnosedatensatz (241, 242) zu erzeugen, wobei der dritte Diagnosedatensatz (241, 242) einen jeweiligen Satz von dritten Diagnosedaten und wenigstens ein dem Satz von dritten Diagnosedaten zugeordnetes drittes Diagnoseergebnis enthält; und den dritten Diagnosedatensatz (241, 242) in einer dritten Datenbank (24) zu speichern;
eine Diagnoseeinheit (11), die ausgebildet ist, die Fehlersuche an dem technischen Objekt auf der Basis wenigstens eines dritten Diagnosedatensatz (241, 242) zu unterstützen.

2. Werkstatt-Diagnosesystem (1) nach Anspruch 1, wobei die ersten, zweiten und dritten Diagnosedaten jeweils wenigstens eine Diagnosevariable und wenigstens einen der Diagnosevariablen zugeordneten Wert umfassen.

3. Werkstatt-Diagnosesystem (1) nach Anspruch 2, wobei die Zuordnungseinheit (14a) und/oder die Datensatz-Erzeugungseinheit (14c) so ausgebildet sind, dass numerische Differenzen zwischen Werten korrespondierender Diagnosedaten der jeweils zu bearbeitenden Datensätze (181, 182, 201, 202) berechnet werden und die Zuordnung eines ersten Diagnosedatensatzes (181, 182) zu einem zweiten Diagnosedatensatz (201, 202) und/oder die Modifikation eines zweiten Diagnosedatensatzes (201, 202) anhand dieser numerischen Differenzen erfolgt, wobei korrespondierende Diagnosedaten Diagnosedaten sind, welche die gleiche Diagnosevariable enthalten.

4. Werkstatt-Diagnosesystem (1) nach Anspruch 2 oder 3, wobei die Zuordnungseinheit (14a) und/oder die Datensatz-Erzeugungseinheit (14c) ausgebildet sind, eine numerische Differenz zwischen den Diagnoseergebnissen der beiden Datensätze (181, 182, 201, 202) anhand einer vorgegebenen Metrik, die einen numerischen Abstand zwischen jeweils zwei Diagnoseergebnissen definiert, zu berechnen.

5. Werkstatt-Diagnosesystem (1) nach Anspruch 3 oder 4, wobei die Zuordnungseinheit (14a) und/oder die Datensatz-Erzeugungseinheit (14c) ausgebildet sind, jeweils einen Mittelwert der numerischen Differenzen als Vergleichswert zu berechnen, wobei der Mittelwert insbesondere ein gewichteter Mittelwert ist.

6. Werkstatt-Diagnosesystem (1) nach einem der Ansprüche 2 bis 5, wobei die Datensatz-Erzeugungseinheit (14c) ausgebildet ist, den dritten Diagnosedatensatz (241, 242) ausgehend von dem zugeordneten zweiten Diagnosedatensatz (201, 202) zu erzeugen und dabei in Abhängigkeit von einem Modifikationsdatensatz, der aus der Gesamtheit aller dem zweiten Diagnosedatensatz (201 , 202) zugeordneten ersten Datensätze (181, 182) ermittelt worden ist, den zweiten Diagnosedatensatz (201, 202) zu modifizieren und dabei
wenigstens einen Wert wenigstens einer Diagnosevariablen in dem zweiten Diagnosedatensatz (201, 202) zu verändern;
wenigstens eine Diagnosevariable aus dem zweiten Diagnosedatensatz (201, 202) zu entfernen; und/oder
wenigstens eine Diagnosevariable zu dem zweiten Diagnosedatensatz (201, 202) hinzuzufügen.

7. Werkstatt-Diagnosesystem (1) nach Anspruch 6, wobei die Datensatz-Erzeugungseinheit (14c) ausgebildet ist, den zweiten Diagnosedatensatz (201, 202) nur zu modifizieren, wenn der ermittelte Modifikationsdatensatz statistisch signifikant ist, wobei das Signifikanzniveau α insbesondere 0,05 beträgt.

8. Werkstatt-Diagnosesystem (1) nach einem der Ansprüche 2 bis 7, wobei die Datensatz-Erzeugungseinheit (14c) ausgebildet ist, den dritten Diagnosedatensatz (241, 242) anhand der Gesamtheit der ersten Datensätze (181, 182), die dem zweiten Diagnosedatensatz (201, 202) zugeordnet sind, zu erzeugen und dabei
a) anhand der Gesamtheit der ersten Datensätze (181, 182), die dem zweiten Diagnosedatensatz (201, 202) zugeordnet sind, Werte für die einzelnen Diagnosevariablen des zweiten Diagnosedatensatzes (201, 202) zu ermitteln, um einen ersten Test-Datensatz zu erzeugen;
b) durch Hinzufügen oder Entfernen von Diagnosevariablen aus dem zweiten Diagnosedatensatz (201, 202) einen oder mehrere weitere Test-Datensätze zu erzeugen und den Diagnosevariablen der weiteren Test-Datensätze anhand der Gesamtheit der ersten Datensätze (181, 182), die dem zweiten Diagnosedatensatz (201, 202) zugeordnet sind, Werte zuzuordnen; und
c) mit Methoden der statistischen Modellselektion aus den Test-Datensätzen denjenigen Test-Datensatz als neuen dritten Datensatz (241, 242) auszuwählen, der in Bezug auf die Gesamtheit der ersten Datensätze (181, 182), die dem zweiten Diagnosedatensatz (201, 202) zugeordnet sind, die höchste statistische Signifikanz aufweist.

9. Werkstatt-Diagnosesystem (1) nach Anspruch 8, wobei die Methoden der statistischen Modellselektion das Kullback-Leibler-Divergence-Verfahren, Verfahren der logistischen Regression und/oder graphische Modelle umfassen.

10. Werkstatt-Diagnosesystem (1) nach einem der vorangehenden Ansprüche, wobei ein erstes, zweites oder drittes Diagnoseergebnis jeweils wenigstens eine Angabe einer als Defekt erkannten Komponenten und/oder Vorschläge für weitere durchzuführende Prüfschritte umfasst.

11. Werkstatt-Diagnosesystem (1) nach einem der vorangehenden Ansprüche, wobei die erste Datenbank (18) derart ausgebildet ist, dass sie erste Diagnosedatensätze (181, 182) von einer Mehrzahl unterschiedlicher Diagnosetester (8) empfängt.

12. Verfahren zur Unterstützung der Fehlersuche an einem technischen Objekt (2), insbesondere an einem Kraftfahrzeug, umfassend:
erste Diagnosedaten von wenigstens einem Objekt-Steuergerät (4) zu empfangen, und an einen Diagnoseserver (12) zu übertragen;
aus jeweils übertragenen ersten Diagnosedaten wenigsten einen Satz von ersten Diagnosedaten zu bilden, der wenigstens einen Teil der ersten Diagnosedaten umfasst, und dem Satz von ersten Diagnosedaten wenigstens ein erstes Diagnoseergebnis zuzuordnen;
die im Zuge aufeinanderfolgender Diagnosen erstellten ersten Diagnosedatensätzen (181, 182) in einer ersten Datenbank (18) zu speichern, wobei jeder der ersten Diagnosedatensätze (181, 182) einen jeweiligen Satz von ersten Diagnosedaten und das wenigstens eine dem Satz von ersten Diagnosedaten zugeordnete erste Diagnoseergebnis umfasst;
**dadurch gekennzeichnet, dass** die Diagnosedaten und/oder das Diagnoseergebnis eines jeweiligen der ersten Diagnosedatensätze (181, 182) mit den Diagnosedaten und/oder dem Diagnoseergebnis vorgegebener zweiter Diagnosedatensätze (201, 202), die in einer zweiten Datenbank (20) gespeichert sind und jeweils einen Satz von zweiten Diagnosedaten und ein dem Satz von zweiten Diagnosedaten zugeordnetes zweites Diagnoseergebnis enthalten, zu vergleichen und dem jeweiligen ersten Diagnosedatensatz (181, 182) einen der vorgegebenen zweiten Diagnosedatensätze (201, 202) zuzuordnen, der nach Maßgabe des Vergleichs die größte Ähnlichkeit mit dem jeweiligen ersten Diagnosedatensatz (181, 182) aufweist;
die von der Zuordnungseinheit (14c) vorgenommene Zuordnung zu speichern;
den jeweils zugeordneten zweiten Diagnosedatensatz (201, 202) anhand der Gesamtheit aller ersten Diagnosedatensätze (181, 182), die diesem zweiten Diagnosedatensatz (201, 202) zugeordnet sind, zu modifizieren, um wenigstens einen dritten Diagnosedatensatz (241, 242) zu erzeugen, wobei der dritte Diagnosedatensatz (241, 242) einen jeweiligen Satz von dritten Diagnosedaten und wenigstens ein dem Satz von dritten Diagnosedaten zugeordnetes drittes Diagnoseergebnis enthält; und
den dritten Diagnosedatensatz (241, 242) in einer dritten Datenbank (24) zu speichern;
wobei das Verfahren zusätzlich umfasst, der Unterstützung der Fehlersuche an dem technischen Objekt wenigstens einen dritten Diagnosedatensatz (241, 242) zugrunde zu legen.

## Claims

1. Workshop diagnostic system (1) for facilitating the search for faults on a technical object, in particular on a motor vehicle, comprising:
at least one diagnostic tester (8) and at least one diagnosis server (12),
wherein the diagnostic tester (8) has at least one object communication apparatus (8b), which is designed to receive first diagnostic data from at least one object control unit (4) of the technical object, and at least one transmission unit (8a), which is designed to transmit the first diagnostic data to the diagnosis server (12);
wherein the diagnostic tester (8) and/or the diagnosis server (12) are designed to use the first diagnostic data to form at least one set of first diagnostic data that comprises at least some of the first diagnostic data and to associate at least one first diagnostic result with the set of first diagnostic data,
a first database (18) designed to store first diagnostic datasets (181, 182) created in the course of successive diagnoses, wherein each of the first diagnostic datasets (181, 182) comprises a respective set of first diagnostic data and the at least one first diagnostic result associated with the set of first diagnostic data,
a second database (20) designed to store predefined second diagnostic datasets (201, 202), wherein each of the second diagnostic datasets (201, 202) comprises a respective set of second diagnostic data and a second diagnostic result associated with the set of second diagnostic data,
**characterized in that** the workshop diagnostic system further comprises an evaluation system (14), having an association unit (14a) designed to compare the diagnostic data and/or the diagnostic result of a respective one of the first diagnostic datasets (181, 182) with the diagnostic data and/or the diagnostic result of the predefined second diagnostic datasets (201, 202), and to associate with the respective first diagnostic dataset (181, 182) one of the predefined second diagnostic datasets (201, 202) that has the greatest similarity to the respective first diagnostic dataset (181, 182) on the basis of the comparison;
a memory unit (14b) designed to store the association made by the association unit (14a); and
a dataset generating unit (14c) designed to modify the respectively associated second diagnostic dataset (201, 202) on the basis of the sum total of all the first diagnostic datasets (181, 182) associated with the second diagnostic dataset (201, 202), in order to generate at least one third diagnostic dataset (241, 242), wherein the third diagnostic dataset (241, 242) contains a respective set of third diagnostic data and at least one third diagnostic result associated with the set of third diagnostic data; and to store the third diagnostic dataset (241, 242) in a third database (24) ;
a diagnostic unit (11) designed to facilitate the search for faults on the technical object on the basis of at least one third diagnostic dataset (241, 242).

2. Workshop diagnostic system (1) according to Claim 1, wherein the first, second and third diagnostic data each comprise at least one diagnostic variable and at least one value associated with the diagnostic variable.

3. Workshop diagnostic system (1) according to Claim 2, wherein the association unit (14a) and/or the dataset generating unit (14c) are designed such that numerical differences between values of corresponding diagnostic data of the respective datasets (181, 182, 201, 202) to be processed are calculated and the association of a first diagnostic dataset (181, 182) with a second diagnostic dataset (201, 202) and/or the modification to a second diagnostic dataset (201, 202) is/are made on the basis of these numerical differences, corresponding diagnostic data being diagnostic data that contain the same diagnostic variable.

4. Workshop diagnostic system (1) according to Claim 2 or 3, wherein the association unit (14a) and/or the dataset generating unit (14c) are designed to calculate a numerical difference between the diagnostic results of the two datasets (181, 182, 201, 202) on the basis of a predefined metric that defines a numerical interval between two respective diagnostic results.

5. Workshop diagnostic system (1) according to Claim 3 or 4, wherein the association unit (14a) and/or the dataset generating unit (14c) are designed to each calculate an average of the numerical differences as a comparison value, the average in particular being a weighted average.

6. Workshop diagnostic system (1) according to one of Claims 2 to 5, wherein the dataset generating unit (14c) is designed to generate the third diagnostic dataset (241, 242) from the associated second diagnostic dataset (201, 202) and in so doing to take a modification dataset, which has been ascertained from the sum total of all the first datasets (181, 182) associated with the second diagnostic dataset (201, 202), as a basis for modifying the second diagnostic dataset (201, 202) and in so doing
to change at least one value of at least one diagnostic variable in the second diagnostic dataset (201, 202); to remove at least one diagnostic variable from the second diagnostic dataset (201, 202); and/or
to add at least one diagnostic variable to the second diagnostic dataset (201, 202).

7. Workshop diagnostic system (1) according to Claim 6, wherein the dataset generating unit (14c) is designed to modify the second diagnostic dataset (201, 202) only if the ascertained modification dataset is statistically significant, the significance level α in particular being 0.05.

8. Workshop diagnostic system (1) according to one of Claims 2 to 7, wherein the dataset generating unit (14c) is designed to generate the third diagnostic dataset (241, 242) on the basis of the sum total of the first datasets (181, 182) associated with the second diagnostic dataset (201, 202) and in so doing
a) to take the sum total of the first datasets (181, 182) associated with the second diagnostic dataset (201, 202) as a basis for ascertaining values for the individual diagnostic variables of the second diagnostic dataset (201, 202) in order to generate a first test dataset;
b) to add or remove diagnostic variables from the second diagnostic dataset (201, 202) in order to generate one or more further test datasets and to assign values to the diagnostic variables of the further test datasets on the basis of the sum total of the first datasets (181, 182) associated with the second diagnostic dataset (201, 202) and
c) to use statistical model selection methods to select from the test datasets that test dataset that has the highest statistical significance with reference to the sum total of the first datasets (181, 182) associated with the second diagnostic dataset (201, 202) as the new third dataset (241, 242).

9. Workshop diagnostic system (1) according to Claim 8, wherein the statistical model selection methods comprise the Kullback-Leibler divergence method, logistical regression methods and/or graphical models.

10. Workshop diagnostic system (1) according to one of the preceding claims, wherein a first, second or third diagnostic result comprises, in each case, at least one indication of a component detected as faulty and/or proposals for further inspection steps to be carried out.

11. Workshop diagnostic system (1) according to one of the preceding claims, wherein the first database (18) is designed such that it receives first diagnostic datasets (181, 182) from a plurality of different diagnostic testers (8).

12. Method for facilitating the search for faults on a technical object (2), in particular on a motor vehicle, comprising:
receiving first diagnostic data from at least one object control unit (4), and transmitting said first diagnostic data to a diagnosis server (12);
using respectively transmitted first diagnostic data to form at least one set of first diagnostic data that comprises at least some of the first diagnostic data, and associating at least one first diagnostic result with the set of first diagnostic data;
storing the first diagnostic datasets (181, 182) created in the course of successive diagnoses in a first database (18), wherein each of the first diagnostic datasets (181, 182) comprises a respective set of first diagnostic data and the at least one first diagnostic result associated with the set of first diagnostic data;
**characterized in that**
comparing the diagnostic data and/or the diagnostic result of a respective one of the first diagnostic datasets (181, 182) with the diagnostic data and/or the diagnostic result of predefined second diagnostic datasets (201, 202) that are stored in a second database (20) and each contain a set of second diagnostic data and a second diagnostic result associated with the set of second diagnostic data, and associating with the respective first diagnostic dataset (181, 182) one of the predefined second diagnostic datasets (201, 202) that has the greatest similarity to the respective first diagnostic dataset (181, 182) on the basis of the comparison;
storing the association made by the association unit (14c) ;
modifying the respectively associated second diagnostic dataset (201, 202) on the basis of the sum total of all the first diagnostic datasets (181, 182) associated with this second diagnostic dataset (201, 202), in order to generate at least one third diagnostic dataset (241, 242), wherein the third diagnostic dataset (241, 242) contains a respective set of third diagnostic data and at least one third diagnostic result associated with the set of third diagnostic data; and
storing the third diagnostic dataset (241, 242) in a third database (24);
wherein the method additionally comprises basing the facilitation of the search for faults on the technical object of at least one third diagnostic dataset (241, 242) .

## Revendications

1. Système de diagnostic en atelier (1) destiné à venir en aide à la recherche de pannes sur un objet technique, notamment sur un véhicule automobile, ledit système comprenant :
au moins un testeur de diagnostic (8) et au moins un serveur de diagnostic (12),
le testeur de diagnostic (8) comportant au moins un dispositif de communication d'objet (8b) qui est conçu pour recevoir des premières données de diagnostic d'au moins un appareil de commande d'objet (4) de l'objet technique, et au moins une unité de transmission (8a) qui est conçue pour transmettre les premières données de diagnostic au serveur de diagnostic (12) ;
le testeur de diagnostic (8) et/ou le serveur de diagnostic (12) étant conçus pour former à partir des premières données de diagnostic au moins un ensemble de premières données de diagnostic qui comprend au moins une partie des premières données de diagnostic et pour associer l'ensemble de premières données de diagnostic à au moins un premier résultat de diagnostic,
une première base de données (18) qui est conçue pour mémoriser des premiers ensembles de données de diagnostic (181, 182) créés au cours de diagnostics successifs, chacun des premiers ensembles de données de diagnostic (181, 182) comprenant un ensemble respectif de premières données de diagnostic et l'au moins un premier résultat de diagnostic associé à l'ensemble de premières données de diagnostic,
une deuxième base de données (20) qui est conçue pour mémoriser des deuxièmes ensembles de données de diagnostic spécifiés (201, 202), chacun des deuxièmes ensembles de données de diagnostic (201, 202) comprenant un ensemble respectif de deuxièmes données de diagnostic et un deuxième résultat de diagnostic associé à l'ensemble de deuxièmes données de diagnostic,
**caractérisé en ce que** le système de diagnostic en atelier comprend en outre un système d'évaluation (14) comportant
une unité d'association (14a) qui est conçue pour comparer les données de diagnostic et/ou le résultat de diagnostic d'un ensemble respectif des premiers ensembles de données de diagnostic (181, 182) aux données de diagnostic et/ou au résultat de diagnostic des deuxièmes ensembles de données de diagnostic spécifiés (201, 202) et pour associer au premier ensemble de données de diagnostic respectif (181, 182) l'un des deuxièmes ensembles de données de diagnostic spécifiés (201, 202) qui, selon la comparaison, présente la plus grande similitude avec le premier ensemble de données de diagnostic respectif (181, 182) ;
une unité de mémorisation (14b) qui est conçue pour mémoriser l'association effectuée par l'unité d'association (14a) ; et
une unité de génération d'ensembles de données (14c) qui est conçue pour modifier le deuxième ensemble de données de diagnostic (201, 202) respectivement associé sur la base de la totalité des premiers ensembles de données de diagnostic (181, 182) qui sont associés à ce deuxième ensemble de diagnostic (201, 202), afin de générer au moins un troisième ensemble de diagnostic (241, 242), le troisième ensemble de données de diagnostic (241, 242) contenant un ensemble respectif de troisièmes données de diagnostic et au moins un troisième résultat de diagnostic associé à l'ensemble de troisièmes données de diagnostic ; et pour mémoriser le troisième ensemble de données de diagnostic (241, 242) dans une troisième base de données (24) ;
une unité de diagnostic (11) qui est conçue pour venir en aide à la recherche de pannes sur l'objet technique sur la base d'au moins un troisième ensemble de données de diagnostic (241, 242) .

2. Système de diagnostic en atelier (1) selon la revendication 1, les première, deuxième et troisième données de diagnostic comprenant chacune au moins une variable de diagnostic et au moins une valeur associée à la variable de diagnostic.

3. Système de diagnostic en atelier (1) selon la revendication 2, l'unité d'association (14a) et/ou l'unité de génération d'ensembles de données (14c) étant conçues pour calculer des différences numériques entre des valeurs de données de diagnostic correspondantes des ensembles de données respectifs à traiter (181, 182, 201, 202) et pour effectuer l'association d'un premier ensemble de diagnostic (181, 182) à un deuxième ensemble de diagnostic (201, 202) et/ou la modification d'un deuxième ensemble de diagnostic (201, 202) sur la base de ces différences numériques, les données de diagnostic correspondantes étant des données de diagnostic qui contiennent la même variable de diagnostic.

4. Système de diagnostic en atelier (1) selon la revendication 2 ou 3, l'unité d'association (14a) et/ou l'unité de génération d'ensembles de données (14c) étant conçues pour calculer une différence numérique entre les résultats de diagnostic des deux ensembles de données (181, 182, 201, 202) sur la base d'une métrique spécifiée qui définit une distance numérique entre deux résultats de diagnostic.

5. Système de diagnostic en atelier (1) selon la revendication 3 ou 4, l'unité d'association (14a) et/ou l'unité de génération d'ensembles de données (14c) étant conçues pour calculer une valeur moyenne des différences numériques comme valeur de comparaison, la valeur moyenne étant notamment une valeur moyenne pondérée.

6. Système de diagnostic en atelier (1) selon l'une des revendications 2 à 5,
l'unité de génération d'ensembles de données (14c) étant conçue pour
générer le troisième ensemble de données de diagnostic (241, 242) sur la base du deuxième ensemble de données de diagnostic associé (201, 202) et modifier ainsi le deuxième ensemble de diagnostic (201, 202) en fonction d'un ensemble de données de modification qui est déterminé à partir de la totalité des premiers ensembles de données (181, 182) associés au deuxième ensemble de diagnostic (201, 202) et
modifier ainsi au moins une valeur d'au moins une variable de diagnostic dans le deuxième ensemble de données de diagnostic (201, 202) ;
supprimer au moins une variable de diagnostic du deuxième ensemble de données de diagnostic (201, 202) ; et/ou
ajouter au moins une variable de diagnostic au deuxième ensemble de données de diagnostic (201, 202).

7. Système de diagnostic en atelier (1) selon la revendication 6,
l'unité de génération d'ensemble de données (14c) étant conçue pour modifier le deuxième ensemble de données de diagnostic (201, 202) uniquement si l'ensemble de données de modification déterminé est statistiquement significatif, le niveau de significativité α étant notamment de 0,05.

8. Système de diagnostic en atelier (1) selon l'une des revendications 2 à 7,
l'unité de génération d'ensembles de données (14c) étant conçue pour générer le troisième ensemble de données de diagnostic (241, 242) sur la base de la totalité des premiers ensembles de données (181, 182) qui sont associés au deuxième ensemble de données de diagnostic (201, 202) et ainsi
a) déterminer sur la base de la totalité des premiers ensembles de données (181, 182), qui sont associés au deuxième ensemble de diagnostic (201, 202), des valeurs pour les différentes variables de diagnostic du deuxième ensemble de diagnostic (201, 202) afin de générer un premier ensemble de données de test ;
b) générer, par ajout ou suppression de variables de diagnostic par rapport au deuxième ensemble de données de diagnostic (201, 202), un ou plusieurs autres ensembles de données de test et les associer aux variables de diagnostic des autres ensembles de données de test sur la base de la totalité des premiers ensembles de données (181, 182) qui sont associés au deuxième ensemble de données de diagnostic (201, 202) ; et
c) sélectionner, par des méthodes de sélection de modèles statistique, parmi les ensembles de données de test, l'ensemble de données de test comme nouveau troisième ensemble de données (241, 242) qui a la signification statistique la plus élevée par rapport à la totalité des premiers ensembles de données (181, 182) qui sont associés au deuxième ensemble de données de diagnostic (201, 202).

9. Système de diagnostic en atelier (1) selon la revendication 8, les méthodes de sélection de modèles statistiques incluant la méthode de divergence de Kullback-Leibler, des méthodes de régression logistique et/ou des modèles graphiques.

10. Système de diagnostic en atelier (1) selon l'une des revendications précédentes, un premier, deuxième ou troisième résultat de diagnostic comprenant chacun au moins une indication d'un composant reconnu défectueux et/ou des suggestions pour d'autres étapes de test à effectuer.

11. Système de diagnostic en atelier (1) selon l'une des revendications précédentes, la première base de données (18) étant conçue pour recevoir des premiers ensembles de données de diagnostic (181, 182) d'une pluralité de différents testeurs de diagnostic (8).

12. Procédé d'aide à la recherche de pannes sur un objet technique (2), notamment sur un véhicule automobile, le procédé comprenant les étapes suivantes :
recevoir des premières données de diagnostic d'au moins un appareil de commande d'objet (4) et les transmettre à un serveur de diagnostic (12) ;
former à partir de premières données de diagnostic transmises à chaque fois au moins un ensemble de premières données de diagnostic qui comprend au moins une partie des premières données de diagnostic, et associer au moins un premier résultat de diagnostic à l'ensemble de premières données de diagnostic ;
mémoriser les premiers ensembles de données de diagnostic (181, 182) créés au cours de diagnostics successifs dans une première base de données (18), chacun des premiers ensembles de données de diagnostic (181, 182) comprenant un ensemble respectif de premières données de diagnostic et l'au moins un premier résultat de diagnostic associé à l'ensemble de premières données de diagnostic ;
**caractérisé en ce que**
la comparaison des données de diagnostic et/ou du résultat de diagnostic d'un ensemble respectif des premiers ensembles de données de diagnostic (181, 182) aux données de diagnostic et/ou au résultat de diagnostic de deuxièmes ensembles de diagnostic spécifiés (201, 202) qui sont mémorisés dans une deuxième base de données (20) et qui contiennent chacun un ensemble de deuxièmes données de diagnostic et un deuxième résultat de diagnostic associé à l'ensemble de deuxièmes données de diagnostic et l'association, au premier ensemble de données de diagnostic respectif (181, 182), d'un des deuxièmes ensembles de données de diagnostic spécifiés (201, 202) qui, selon la comparaison, présente les plus grande similitude avec le premier ensemble de données de diagnostic respectif (181, 182) ;
la mémorisation de l'association effectuée par l'unité d'association (14c) ;
la modification du deuxième ensemble de données de diagnostic (201, 202) respectivement associé sur la base de la totalité des premiers ensembles de données de diagnostic (181, 182) associés à ce deuxième ensemble de données de diagnostic (201, 202) afin de générer au moins un troisième ensemble de données de diagnostic (241, 242), le troisième ensemble de données de diagnostic (241, 242) contenant un ensemble respectif de troisièmes données de diagnostic et au moins un troisième résultat de diagnostic associé à l'ensemble de troisièmes données de diagnostic ; et
la mémorisation du troisième ensemble de données de diagnostic (241, 242) dans une troisième base de données (24) ;
le procédé comprenant en outre une aide à la recherche de panne sur l'objet technique sur la base d'au moins un troisième ensemble de données de diagnostic (241, 242).
